Europäisches Patentamt

European Patent Office

Office européen des brevets

(19)

(11) Numéro de publication:

**0 066 912**
**A1**

# DEMANDE DE BREVET EUROPEEN

(21) Numéro de dépôt: 82200590.6

(22) Date de dépôt: 14.05.82

(51) Int. Cl.³: **F 24 J 3/02**

(30) Priorité: **20.05.81 BE 2059168**

(43) Date de publication de la demande: **15.12.82**
**Bulletin 82/50**

(84) Etats contractants désignés: **AT CH DE FR GB IT LI LU NL SE**

(71) Demandeur: **WARMELUCHTCENTRALE W.L.C. P.V.B.A.**
**Société dite:, Jan Davidtstraat 70, B-3203 Linden (BE)**

(72) Inventeur: **Driesmans, Jean, Jan Davidtstraat 70,**
**B-3202 Linden (BE)**

(74) Mandataire: **Ottelohe, Jozef René, Bureau Ottelohe J.R.**
**Postbus 3 Fruithoflaan 105, B-2600 Antwerpen**
**(Berchem) (BE)**

(54) **Procédé et dispositif pour l'utilisation d'énergie géothermique à des fins de chauffage.**

(57) L'invention concerne un procédé et un dispositif pour collecter rapidement et d'une manière optimale l'énergie géothermique dans un puits de forage et d'évacuer cette énergie vers une installation de chauffage.

Dans le puits de forage (1) il est suspendu un échangeur de chaleur (3) raccordé à une groupe de pompes de chaleur (7) qui transmet à une installation de chauffage la chaleur. La partie du puits de forage (1) située au-dessus de l'échangeur de chaleur (3) est hermétiquement fermée par un bouchon (13) et dans cette partie il débouche une conduite sous pression (14) raccordée à un groupe à fluide sous pression (15) permettant de refouler et d'aspirer alternativement dans le puits de forage (1), l'eau de la nappe souterraine.

0066912

— 1 —

Procédé et dispositif pour l'utilisation d'énergie géothermique à des fins de chauffage.

L'invention a pour objet un procédé et un dispositif avec
lequel il est possible de collecter rapidement et d'une
manière optimale l'énergie géothermique dans un puits de
forage et d'évacuer ensuite cette énergie par l'intermédiaire d'un échangeur de chaleur ou d'un évaporateur raccordé à un groupe de pompes de chaleur, vers une installation de chauffage dont le rendement est ainsi sensiblement relevé.

On connaît un procédé et un dispositif permettant d'extraire l'énergie géothermique en pompant l'eau d'une nappe
souterraine et en obligeant celle-ci à céder sa chaleur.

Un inconvénient d'un tel dispositif réside dans le fait
qu'il faut pas mal d'énergie pour pomper l'eau souterraine
et qu'en retirant l'eau du sol, il peut facilement se produire des déplacements de terrains. Le niveau de l'eau
peut également baisser jusqu'à un niveau tel que le débit
de l'eau devient insuffisant. L'eau souterraine amenée en
surface peut en outre être souillée. Même si l'on évacue dans un deuxième puits l'eau pompée, une telle évacuation présente l'inconvénient de créer éventuellement entre les puits un canal de court-circuitage de l'eau souterraine, de sorte que le rendement du dispositif d'extraction de la chaleur peut en être sensiblement affecté.

Un autre dispositif bien connu consiste en un échangeur de chaleur enfoui dans le sol ou suspendu dans une nappe d'eau souterraine ou en un évaporateur, raccordé à un groupe de pompes de chaleur, ce groupe peut être composé d'un compresseur, d'un condenseur et d'une valve d'expansion, le fluide caloporteur, s'écoulant par les conduites de circulation, étant par exemple le glycol.

Ce dispositif présente toutefois l'inconvénient que l'eau souterraine n'est que peu ou pas en mouvement, de sorte que la chaleur n'est que partiellement enlevée à l'eau souterraine et au terrain qui l'entoure. On court en outre le risque de voir se produire une congélation autour de l'échangeur de chaleur ou de l'évaporateur si l'on utilise un fluide de refroidissement comme fluide caloporteur.

Pour obvier à ces inconvénients et relever sensiblement le rendement du dispositif ci-avant décrit, on a, conformément à la caractéristique principale de l'invention, mis au point un procédé qui consiste en ordre principal à fermer hermétiquement le puits de forage au-dessus de l'échangeur de chaleur ou de l'évaporateur et ensuite à envoyer alternativement d'abord un fluide sous pression dans la partie fermée du puits de forage pour pouvoir exercer concentriquement autour du puits une pression permettant de refouler l'eau de la nappe souterraine et de mettre celle-ci en mouvement pour qu'elle puisse capter de la manière optimale la chaleur de la terre, et d'enlever ensuite de la partie fermée du puits de forage le fluide sous pression par aspiration, cela pour attirer à nouveau dans le puits de forage l'eau souterraine chauffée par la terre et l'obliger à céder sa chaleur à l'échangeur de chaleur.

Conformément à une autre caractéristique principale de l'invention, le dispositif pour l'application du procédé précité, se compose en ordre principal d'un bouchon qui ferme hermétiquement le puits de forage au-dessus de l'échangeur de chaleur ou de l'évaporateur monté dans ce puits de forage, d'une conduite sous pression qui débouche dans la partie fermée précitée du puits de forage et d'un groupe à fluide sous pression y raccordé, permettant tour à tour de refouler par pression l'eau de la nappe souterraine et de l'attirer dans le puits de forage.

Ainsi l'eau souterraine se met efficacement en mouvement et elle est en contact avec une grande partie de la terre, relativement loin et concentriquement autour du puits, de sorte que cette eau enlève efficacement et rapidement à la terre la chaleur de celle-ci.

A titre d'exemple, sans aucun caractère limitatif, il sera présenté ci-après une description détaillée d'une forme choisie d'exécution du susdit dispositif conforme à l'invention. Cette description renvoie aux dessins ci-annexés dans lesquels:

la fig. 1 est une vue schématique du dispositif;

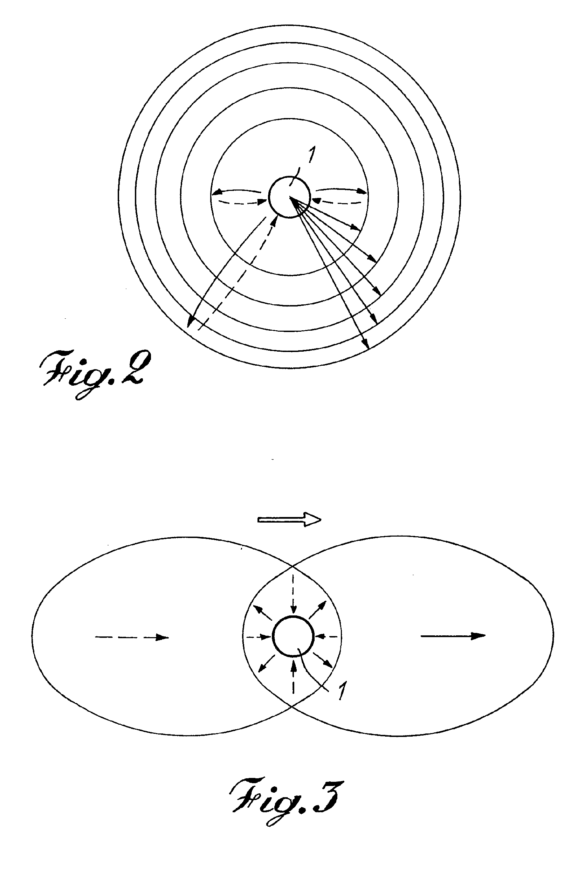

la fig. 2 montre schématiquement l'effet de la compression et de l'aspiration de l'eau souterraine, autour du puits de forage;

la fig. 3 reproduit le même schéma que celui de la fig.2, le puits de forage se trouvant dans une nappe souterraine d'eau qui s'écoule.

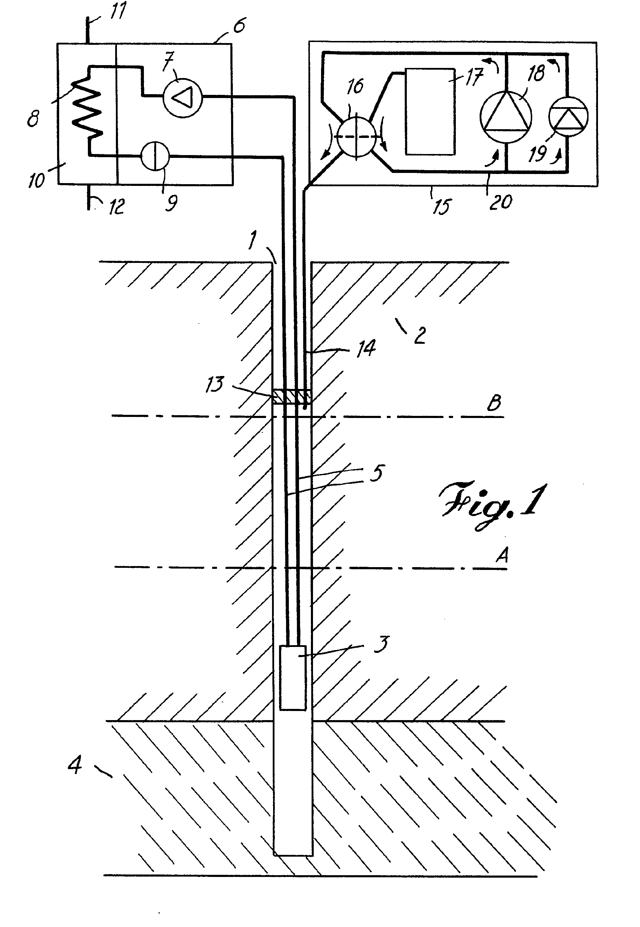

Dans ces figures, on remarque que dans un puits de forage 1, foré dans la terre 2, il est suspendu dans ou au-dessus de la nappe d'eau 4, proprement dite, un échangeur de chaleur ou un évaporateur 3. Cet échangeur de chaleur 3, couplé par une conduite de circulation 5 à un groupe de pompes de chaleur 6, et dans lequel circule un fluide caloporteur, se compose dans ce cas, d'un compresseur 7, d'un condenseur 8 et d'une valve d'expansion 9. Le condenseur 8 se trouve dans un récipient 10 qui d'un côté est raccordé à une conduite d'amenée 11 et d'un autre côté à la conduite de retour 12 d'une installation de chauffage (non représentée), tandis que le condenseur 8 cède sa chaleur au fluide qui s'écoule à travers l'installation de chauffage. Dans la fig. 1, le niveau le plus bas de l'eau est indiqué par la ligne A et le niveau le plus élevé de l'eau, par la ligne B. Un bouchon 13 ferme hermétiquement le puits de forage 1 au-dessus du niveau B le plus élevé de l'eau. Ce bouchon 13 est traversé par une conduite sous pression 14 raccordée au groupe à fluide sous pression 15,à savoir à un groupe qui sert à presser alternativement dans le puits de forage 1 un fluide sous pression plus léger que l'eau. Ce groupe à fluide sous pression 15 se compose d'un robinet à 4 voies 16, commandé automatiquement, d'une chaudière tampon 17 remplie d'un fluide sous pression, par exemple, de l'air comprimé, d'une pompe foulante 18, d'une valve de retenue 19 et d'un conduit de dérivation 20, auxquels sont raccordés les accessoires susnommés.

Ce dispositif fonctionne comme décrit ci-après.

Pendant l'arrêt du dispositif, la pression du fluide qui règne dans la chaudière-tampon 17 est égale à celle qui règne dans l'espace du puits de forage 1, situé sous le bouchon 13. Dans le puits de forage 1, l'eau se trouve alors à peu près à mi-distance entre le niveau le plus bas A et le niveau le plus élevé B de l'eau. Lorsque le robinet à 4 voies 16 est placé dans la position indiquée à la fig. 1 (en trait plein) et que la pompe 18 et le compresseur 7 sont mis en marche, le fluide, du fait du fonctionnement de la pompe foulante 18, s'écoule vers le puits de forage 1 et l'eau qui s'y trouve est pressée vers le bas jusqu'à ce qu'elle atteigne son niveau A le plus bas. L'eau souterraine qui se trouve dans la nappe 4 est alors refoulée par pression sur une distance assez grande et concentriquement tout autour du puits de forage 1, de sorte que cette eau vient efficacement en contact avec la terre 2 dont elle capte la chaleur. Lorsque la nappe d'eau 4 contient en pourcentage moins d'eau, le "gonflement" concentrique de la masse d'eau souterraine grandit, ceci ayant pour effet d'agrandir automatiquement le champ souterrain d'extraction de la chaleur dans les couches pauvres en eau. Une fois que l'eau présente dans le puits de forage 1 a été refoulée de manière à atteindre son niveau le plus bas A, le robinet à 4 voies 16 est alors placé dans la position indiquée à la fig. 1 en traits interrompus. Le fluide sous pression s'écoule alors à nouveau très rapidement vers la chaudière-tampon 17, via la valve de retenue 19. La pression qui règne dans le puits de forage 1 est ainsi diminuée, de sorte qu'à nouveau l'eau monte rapidement dans ce puits jusqu'à ce qu'elle atteigne à nouveau le niveau moyen situé entre le niveau le plus bas A et celui le plus élevé B.

Une fois l'équilibre de pression atteint dans le puits de forage 1 et dans la chaudière-tampon 17, ainsi qu'après la fermeture de la valve de retenue 19, la pompe foulante 18 encore en marche, maintiendra l'écoulement du fluide jusqu'à ce que la presque totalité du fluide soit pompée dans la chaudière-tampon 17, à la suite de quoi l'eau atteindra son niveau B le plus élevé dans le puits de forage 1. A cause de la modification relativement rapide de la pression dans le puits de forage 1, l'eau qui se trouve au point le plus bas du puits de forage 1 est enlevée concentriquement de la nappe d'eau 4, ce qui a pour effet d'amener en même temps une grande quantité de chaleur vers le puits. L'échangeur de chaleur 3 capte cette chaleur qui, via la conduite de circulation 5 et le groupe de pompes de chaleur 6, est amenée vers le récipient 10 où ladite chaleur est transmise au fluide caloporteur d'une installation de chauffage, non représentée. Lorsque l'eau a atteint dans le puits 1, son niveau B le plus élevé, le cycle d'aspiration se termine et le robinet à 4 voies 16 est remis dans la position (cycle de compression) indiquée en trait plein dans la fig. 1. Le cycle "pression-aspiration" tout entier est alors répété.Dans un cycle complet "pression-aspiration" on utilise donc deux fois l'écoulement rapide du fluide sous pression via la valve de retenue 19 et en opérant ainsi, seule une partie de ce fluide doit être pompée, ce qui permet d'économiser une grande quantité d'énergie. On récupère en effet pas mal d'énergie de la détente du fluide comprimé pendant le cycle d'aspiration, dans la chaudière-tampon 17.

Par la répétition successive du cycle "pression-compression", la masse d'eau "se gonfle" et se "dégonfle" alternativement et concentriquement autour du puits de forage 1. Lors du mouvement de l'eau qui se "gonfle", l'eau refroidie reçoit de la terre une quantité de chaleur qui aura été transmise à l'échangeur de chaleur 3 par le mouvement de retour de l'eau. On a alors réalisé un mouvement de pompage qui augmente la quantité d'énergie géothermique recueillie et envoie celle-ci vers la partie inférieure extrême du puits de forage 1.

Si la masse d'eau 4 qui s'écoule provient d'une nappe souterraine en écoulement, le dispositif susdécrit fonctionne de la même manière. A cause de l'écoulement de l'eau, on constate que pendant le cycle d'aspiration, il est chaque fois attiré de l'eau fraîche vers le puits de forage 1 et que, pendant le cycle de compression, il est chaque fois évacué avec la masse d'eau (fig.3) qui s'écoule, une masse d'eau refroidie, de sorte que la surface totale du champ d'extraction de la chaleur est notablement agrandie et que la quantité de chaleur totale recueille augmente également dans une forte mesure.

Il va de soi que les accessoires susdécrits peuvent être remplacés par d'autres utilisés à la même fin et que le dispositif peut être complété par des accessoires qui pourraient en améliorer le fonctionnement en pratique.

REVENDICATIONS

_____

1.- Procédé pour l'utilisation d'énergie géothermique à des fins de chauffage, où un échangeur de chaleur suspendu dans un puits de forage, capte une quantité de chaleur qui est transmise par l'eau souterraine s'écoulant dans le puits de forage et dans laquelle la quantité de chaleur captée est dérivée vers une installation de chauffage, caractérisé par le fait que le puits de forage situé au-dessus de l'échangeur de chaleur est fermé hermétiquement et qu'ensuite, alternativement, un fluide sous pression est d'abord comprimé dans la partie fermée du puits de forage pour le refoulement concentrique tout autour du puits de l'eau souterraine et le captage de la chaleur de la terre par l'eau, et ensuite l'eau souterraine réchauffée par la terre est attiré à nouveau dans le puits de forage et extrait par aspiration de la partie fermée du puits, pour céder la chaleur de cette eau à l'échangeur de chaleur.

2.- Dispositif appliquant le procédé conforme à la revendication 1, et dans laquelle il est suspendu dans un puits de forage (1), un échangeur de chaleur (3) raccordé à une groupe de pompes de chaleur (7) par une conduite d'amenée et une conduite d'évacuation (5), groupe dont le fluide caloporteur qui s'écoule dans ce groupe, transmet à une installation de chauffage la quantité de chaleur reçue,extraite du sol, caractérisée par le fait que la partie du puits de forage (1) située au-dessus de l'échangeur de chaleur (3) est hermétiquement fermée par un bouchon (13) et que dans la partie fermée du puits de forage (1) il débouche une conduite sous pression (14) raccordée à un groupe à fluide sous pression (15) permettant de refouler et d'aspirer alternativement dans le puits de forage (1), l'eau de la nappe souterraine.

0066912

3.- Dispositif conforme à la revendication 2, caractérisé par le fait que la conduite sous pression (14) traverse le bouchon (13) qui ferme hermétiquement le puits de forage (1).

4.- Dispositif conforme à la revendication 2, caractérisé par le fait que le groupe à fluide sous pression (15) se compose d'un conduit de dérivation (20) raccordé à la conduite sous pression (14), d'un robinet à 4 voies (16), placé entre le conduit de dérivation (20) précité et la conduite sous pression (14) et raccordée au conduit de dérivation précité, une chaudière-tampon (17) pour un fluide sous pression, une valve de retenue (19) servant à conduire rapidement le fluide sous pression dans une seule direction alternativement vers le puits de forage (1) et la chaudière-tampon (17) et une pompe foulante (18) permettant de refouler le fluide sous pression, alternativement dans le puits de forage (1) et dans la chaudière-tampon (17), cela lorsque la pression régnant dans la chaudière-tampon (17) est égale à celle régnant dans le puits de forage (1)

0066912

Fig.1

Fig.2

Fig.3

Office européen
des brevets

**RAPPORT DE RECHERCHE EUROPEENNE**

0066912
Numéro de la demande

EP 82 20 0590

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-4 220 202 (ALADIEU) *En entier* | 1,2 | F 24 J 3/02 |
| | ----- | | |

**DOMAINES TECHNIQUES RECHERCHES (Int. Cl. ³)**

F 24 J

Le présent rapport de recherche a été établi pour toutes les revendications

| Lieu de la recherche | Date d'achèvement de la recherche | Examinateur |
|---|---|---|
| LA HAYE | 30-08-1982 | SMETS E.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82